# FASCICULE DE BREVET EUROPEEN

(11) **EP 1 484 543 B1**
(45) Date de publication et mention de la délivrance du brevet: **05.11.2008**
(21) Numéro de dépôt: 04291309.5
(22) Date de dépôt: 24.05.2004
(51) Int. Cl.: F16L 19/12

(54) **Dispositif de raccordement pour tuyauteries**
Verbindungsvorrichtung für Rohre
Connecting device for pipes

(30) Priorité: 03.06.2003 FR 0306666
(43) Date de publication de la demande: 08.12.2004
(73) Titulaire: LEGRIS S.A., F-35000 Rennes (FR)
(72) Inventeur: Sinning, Hans D., 34286 Spangenerg (DE); Le Quere, Philippe, 35830 Betton (FR); Kendziorra, Thomas, 34225 Baunatal (DE)
(74) Mandataire: Robert, Jean-Pierre

(56) Documents cités:
- WO-A-97/20163
- US-A- 2 316 806
- US-A- 2 511 134

## Description

La présente invention concerne les raccords pour tuyauteries, notamment pour tuyauteries métalliques destinées à véhiculer des fluides à haute pression.

### ARRIERE PLAN DE L'INVENTION

Ces dispositifs comprennent de manière connue depuis longtemps un corps dans lequel pénètre une extrémité de la tuyauterie à raccorder, du côté d'un embout fileté extérieurement de ce corps qui comporte un logement d'accueil de l'extrémité de la tuyauterie avec une section d'entrée conique appelée cône à 24°. Un écrou est susceptible d'être vissé sur l'embout fileté et au moins une pièce annulaire est pressée entre le corps et l'écrou pour d'une part assurer l'arrimage mécanique du corps à la tuyauterie et d'autre part l'étanchéité entre ce corps et cette tuyauterie.

On citera par exemple le document DE 19 709464 qui décrit une pièce annulaire dont le nez avant forme la partie d'ancrage qui est sertie sur le tube et dont la partie arrière comporte un joint torique dans une gorge dont le diamètre intérieur est inférieur à celui extérieur du tube. Il existe donc un risque d'arrachage ou de détérioration de ce joint à l'introduction du tube dans le raccord.

Dans un document SE 466 468, l'étanchéité est assurée par une bague avant métallique qui pénètre dans le cône à 24° jusqu'à ce qu'un talon vienne en butée à l'embouchure du cône. L'arrimage mécanique est assuré par une bague arrière de poussée de la bague avant qui possède une extension du côté de la bague avant s'engageant dans un cône de cette dernière forçant l'extension à se rétreindre radialement pour se sertir sur le tube et une extension du côté de l'écrou qui coopère également avec une surface conique de cet écrou pour également être sertie sur le tube.

Dans d'autres dispositifs comme ceux illustrés par le document DE 19 727 149 ou comme ceux qui sont présents sur le marché, d'une part la bague avant dite d'étanchéité porte un nez en élastomère qui seul pénètre dans le cône à 24° du corps, et d'autre part, la bague arrière dite bague coupante ne mord dans le tube que par son extension du côté de la bague d'étanchéité.

Dans le premier type de dispositifs on a constaté qu'après un usage prolongé, il se produisait des fuites tenant principalement au fait que les variations de pression engendrent des vibrations qui provoquent des micro-matages des pièces métalliques en contact, donnant ainsi naissance à des jeux, sièges des fuites constatées.

Dans le second type de dispositifs, l'alignement des pièces et notamment de la bague d'étanchéité avec son nez en élastomère et du cône à 24° n'est pas toujours satisfaisant si bien que lors du montage, la coopération des pièces entre elles est défectueuse et l'étanchéité mal assurée.

Les documents US 2 511 134 et US 2 316 806 divulguent tous deux un dispositif selon le préambule de la revendication 1 dans lequel l'élément d'étanchéité est directement en contact avec l'écrou.

### OBJET DE L'INVENTION

Par la présente invention on entend remédier aux inconvénients des dispositifs antérieurs en séparant nettement la fonction d'ancrage et de liaison mécanique de la fonction étanchéité.

### BREVE DESCRIPTION DE L'INVENTION

A cet effet, l'invention a donc pour objet un dispositif de raccordement étanche l'extrémité d'une tuyauterie à un corps présentant un embout fileté extérieurement et un logement intérieur d'accueil de cette extrémité, avec une section d'entrée conique, comprenant :
- un écrou avec une chambre taraudée pour la réalisation et le démontage du raccord, coopérant avec l'embout fileté,
- une première bague coupante possédant un nez plastiquement déformable destiné à pénétrer dans la section conique,
- une seconde bague de poussée possédant une face avant destinée à coopérer avec l'arrière de la bague coupante et une face arrière pour coopérer avec l'écrou,
les deux bagues étant logées dans la chambre de l'écrou pour être serrées entre ce dernier et le corps, ce dispositif comprenant un élément annulaire d'étanchéité logé entre la bague coupante et la bague de poussée pour être au moins partiellement comprimé et faire saillie radialement entre celles-ci vers l'intérieur au moment du serrage.

Un tel mode de réalisation présente l'avantage de disposer d'un élément d'étanchéité, par exemple un joint torique ou un joint annulaire plat, dont le diamètre interne est, avant compression, supérieur au diamètre du tube à raccorder, si bien que, lors de la mise en place du dispositif, c'est-à-dire après avoir engagé l'écrou sur l'embout fileté du corps, la pénétration de l'extrémité du tube ne provoque pas d'accrochage ou de blessure du joint.

De manière préférée, cet élément d'étanchéité est logé dans un chambrage intérieur de la bague de poussée, ouvert du côté d'une collerette axiale arrière de la bague coupante qui peut y pénétrer, de préférence avec un léger serrage. Ainsi, le joint annulaire, qu'il soit plat ou torique, est totalement protégé dans le chambrage au droit de la collerette.

D'autres caractéristiques et avantages de l'invention ressortiront de la description de quelques uns de ces modes de réalisation donnée ci-après à titre d'exemple.

### BREVE DESCRIPTION DES DESSINS

Il sera fait référence aux dessins annexés parmi lesquels :
- la figure 1 est une demi-vue en coupe axiale d'un dispositif de raccordement conforme à l'invention dans un premier mode de réalisation, à l'état pré-monté avant serrage,
- la figure 2 est une même demi-vue du dispositif de la figure 1, le raccord étant réalisé,
- la figure 3 est une même demi-vue d'une variante de réalisation du dispositif des figures 1 et 2,
- la figure 4 illustre par une demi-coupe axiale une variante de réalisation dans laquelle les dispositifs d'étanchéité sont des joints toriques,
- la figure 5 est une vue par une demi-coupe d'un troisième mode de réalisation,
- la figure 6 illustre un quatrième mode de réalisation,
- la figure 7 illustre un cinquième mode de réalisation et,
- la figure 8 est une demi-vue en coupe du dispositif selon la figure 1, associé à son élément de conditionnement,
- les figures 9 et 10 illustrent respectivement à l'état pré-monté et à l'état serré, par une demi-vue en coupe axiale, une variante de réalisation du dispositif représenté aux figures 1 et 2.

### DESCRIPTION DETAILLEE DE L'INVENTION

De manière tout à fait classique, le dispositif de liaison étanche ou de raccordement d'une tuyauterie 1 à un corps 2 pourvu d'un embout fileté 2a et d'un logement d'accueil 3 du tube 1 comportant une section d'entrée conique 3a de cône à 24°, comprend un écrou 4 avec une chambre taraudée 4a, une bague coupante 5 et une bague de poussée 6.

La bague coupante 5 possède une extension avant ou nez 5a qui porte ici deux chants coupants 5b et 5c, cette extension pénétrant à l'intérieur de la section conique 3a du corps 2 lorsque l'écrou 4 est serré sur l'embout fileté 2. La partie arrière de la bague coupante 5 est limitée par un épaulement 5d formant face de poussée au-delà duquel s'étend une collerette axiale 5e tournée en direction de la bague de poussée 6.

La bague de poussée 6 comporte une face frontale 6a tournée vers l'épaulement 5d et un chambrage 6b destiné à recevoir la collerette axiale 5e de la bague coupante et formant un logement dans lequel est disposé un joint annulaire 7 en matière plastique ou en matière élastomère susceptible d'être comprimé entre l'extension 5e qui pénètre dans le chambrage 6b et la surface 6c d'extrémité de ce chambrage.

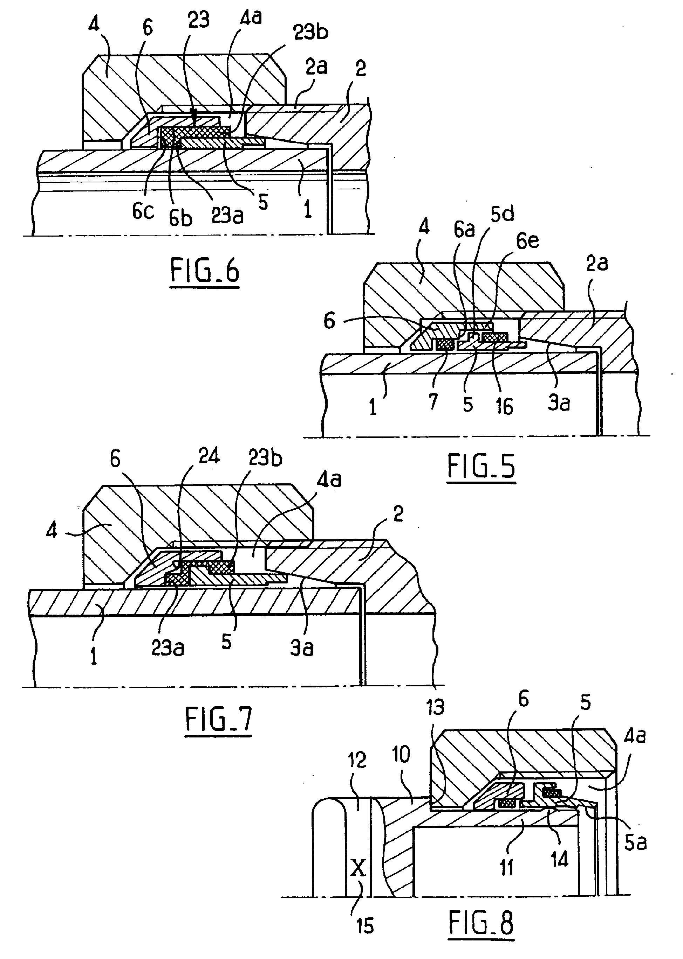

La partie arrière de la bague de poussée 6 possède une surface extérieure 6d tronconique pour coopérer avec une face tronconique correspondante 8 appartenant à la paroi arrière de l'écrou 4. Cette paroi est pourvue d'un orifice 9 de passage soit du tube 1 à raccorder, soit d'un mandrin 10 (figure 8) réalisé par exemple en matière plastique, qui est divisé en une section cylindrique 11, ici tubulaire, interne à la chambre 4a et une section 12 externe à l'écrou, par un épaulement 13. La section interne 11 possède au droit de la bague coupante 5 logée dans la chambre 4a, un bourrelet 14 qui coopère par friction avec cette bague coupante 5 de manière à former un moyen de retenue des deux bagues 5 et 6 à l'intérieur de la chambre 4a de l'écrou 4. La partie externe 12 du mandrin 10 constitue le support pour un signe 15 d'identification du dispositif de raccordement, tel que par exemple le diamètre nominal du tube auquel ce dispositif est destiné. On notera que cet ensemble, dans lequel la section 12 externe du mandrin 10 est située à l'opposé du nez 5a de la bague 5, peut se monter provisoirement à l'extrémité du corps 2 qui peut être partiellement vissé sur l'embout fileté 2a, le mandrin 10 formant un bouchon pour ce corps avant l'installation de la tuyauterie à raccorder. On indiquera également que l'ensemble des composants écrou, bague coupante et bague de poussée, maintenus en une unité par le mandrin 10, est de manutention et de conditionnement beaucoup plus simples que si les composants étaient séparés.

On indiquera qu'à titre de variante, le mandrin 10 peut être introduit dans l'écrou 4 par la chambre taraudée 4a. Dans ce cas l'épaulement 13 porte sur l'embouchure de cette chambre. L'extrémité libre de la partie tubulaire 11 du mandrin 10 est alors logée dans l'orifice 7 et dans ce cas la fonction de bouchon de l'embout fileté ne peut pas être assurée.

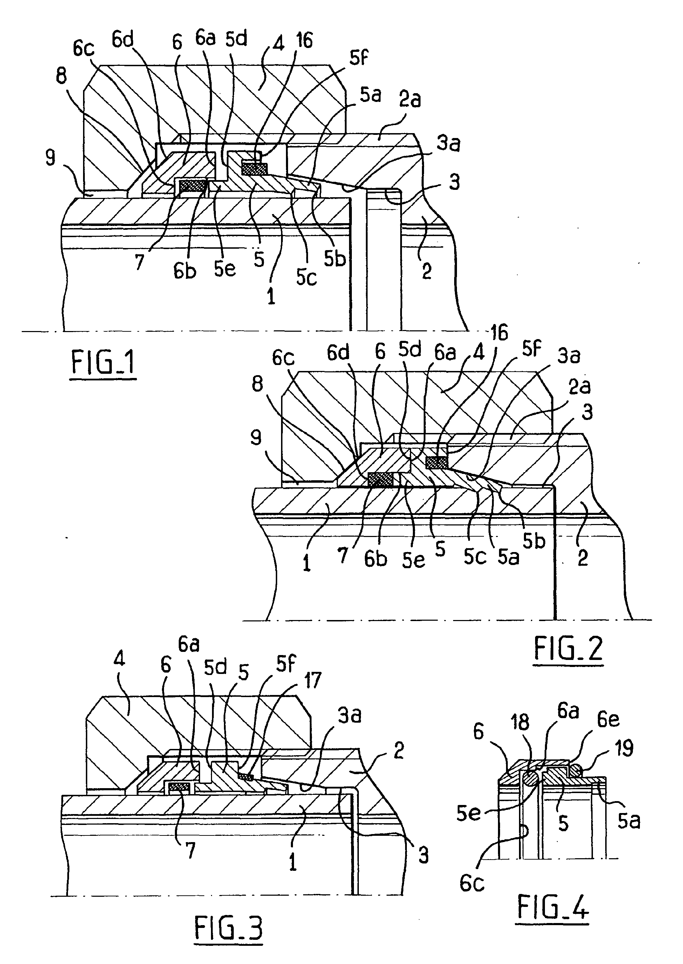

Aux figures 1 et 2, la bague coupante 5 comporte un épaulement d'appui 5f qui limite sa pénétration à l'intérieur du cône 3a à 24°. Cet épaulement 5f constitue directement ou par l'intermédiaire d'un petit chambrage, l'appui pour un élément d'étanchéité supplémentaire 16, ici en forme d'un anneau cylindrique. Cet élément 16 étant situé à la base du nez 5a portant les chants coupants 5b et 5c.

On constate à la figure 2 que le vissage de l'écrou 4 sur l'embout 2a rapproche la bagues 5 et 6 qui viennent au contact l'une de l'autre par leur face 5d et 6a, la pénétration forcée du nez 5a dans le cône 3a à 24° provoquant une déformation plastique donc un sertissage de ce nez sur le tube 1 avec pénétration dans le tube des chants coupants 5b et 5c, et la compression axiale du joint 7 qui gonfle vers l'intérieur en faisant saillie en direction du tube pour former une première barrière d'étanchéité entre les bagues et le tube. Dans le même temps, le joint 16 est axialement comprimé par l'extrémité du nez fileté 2a se rapprochant de l'épaulement d'extrémité 5f de la bague coupante 5, pour former une deuxième barrière d'étanchéité entre le corps 2 et les bagues. L'avantage de cette disposition des éléments d'étanchéité réside dans la protection dont ils bénéficient avant que le raccordement soit réalisé. En effet, le joint 7 peut être prévu d'un diamètre interne plus important que le diamètre externe du tube 7 si bien que l'introduction du tube 7 ne risque pas de provoquer des blessures ou des détériorations de ce joint. En outre, la disposition du joint 16 qui ne pénètre pas à l'intérieur du cône à 24°, ne présente pas le risque d'être arraché lors de cette pénétration et d'être ensuite mal disposé pour assurer une étanchéité efficace.

Dans la variante de réalisation de la figure 3, le joint 16 est ici remplacé par un joint plat 17 qui coopère avec le débouché de l'orifice conique 3a sur la face d'extrémité du corps 2.

A la figure 4, on retrouve les éléments déjà décrits précédemment avec les mêmes références. On constate que le joints cylindriques ont été remplacés par des joints toriques 18, 19. Par ailleurs, la géométrie des bagues 5 et 6 est différente de celle déjà décrite. En effet on constate que le nez 5a est ici cylindrique alors que précédemment il était légèrement conique et que l'épaulement limitant la pénétration de la bague coupante à l'intérieur du cône à 24° est porté cette fois par la bague de poussée 6 au moyen d'une extension axiale 6e qui vient coiffer la partie arrière de la bague 5 et le joint torique 19 en fin de serrage.

Sur la figure 5 on retrouve les éléments déjà décrits aux figures 1 et 2, avec une géométrie de bague coupante et de poussée identique à celle de la figure 4 mais mettant en oeuvre des joints d'étanchéité 21, 22 cylindriques au lieu d'être toriques.

A la figure 6, il n'existe plus qu'un seul joint 23 d'étanchéité qui est logé dans le chambrage 6b de la bague de poussée 6. La bague coupante 5 se résume à un manchon cylindrique de dimension diamétrale sensiblement identique à l'extension 5e de la figure 1, de sorte que cette bague 5 peut comprimer avec la paroi arrière 6c du chambrage 6b, une partie 23a du joint 23 de la même manière qu'est comprimé le joint 7 des figures 1 et 2. Un manchon 23b du joint 23 prolonge tubulairement la partie 23a de ce dernier pour coiffer la bague coupante 5 et faire saillie au-delà de l'extrémité 6e de la bague de poussée 6 qui vient coopérer, comme à la figure 4, avec la face frontale de l'embout fileté 2a du corps 2. L'intérêt de cette disposition réside dans le fait que le joint 23 peut constituer un moyen de maintien des bagues 5 et 6 assemblées par friction grâce au manchon 23b comprimées entre elles, ces trois composants formant alors une unité logée dans la chambre 4a de l'écrou 4.

Il est préférable cependant que le contact entre la bague 5 et la bague 6 soit direct, métal sur métal. C'est pourquoi la figure 7 illustre une variante préférée de la figure 6 dans laquelle la bague 6 possède sur sa partie arrière de poussée 6a, des moyens 24 (ici une arête vive) qui sont capables de découper une partie affaiblie du joint 23 formant la liaison entre la partie 23a de ce joint et le manchon 23b de celui-ci et afin d'autoriser un contact métal - métal entre les bagues 5 et 6 à l'endroit de cisaillement du joint.

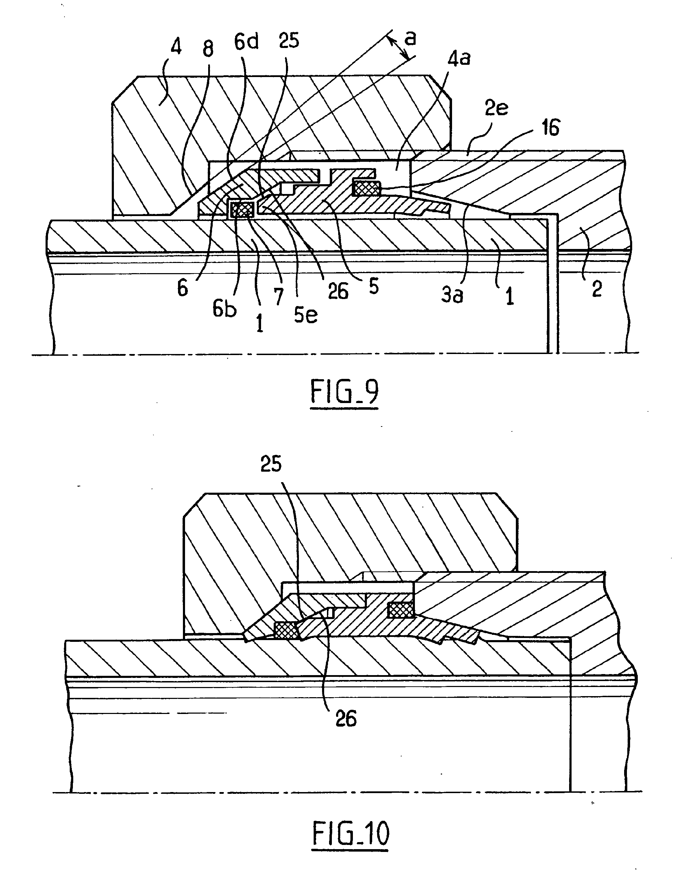

Aux figures 9 et 10, on a représenté une variante de réalisation des figures 1 et 2. C'est ainsi que l'angle du cône de la face 8 de l'écrou est plus ouvert que celui de la face arrière 6d de la bague de poussée (différence angulaire marquée a sur la figure 9).

En outre, l'extension axiale 5e à l'arrière de la bague coupante 5 est plus épaisse que le chambrage 6b de la bague de poussée dont l'entrée est entourée d'une surface conique 26 qui coopère avec l'extrémité de l'extension 5e, pourvue de préférence d'un chamfrein 25.

Ces deux dispositions créent, pour la première, un sertissage de l'arrière de la bague de poussée 6 sur le tube 1 qui limite le fluage du joint 7 et, pour la seconde, un sertissage de l'extension 5e de la bague 5 qui, également, limite le fluage du joint. Ce dernier se trouve alors enfermé comprimé dans un espace sans jeu possible ni sous l'effet des contraintes thermiques ni sous l'effet des vibrations.

## Revendications

1. Dispositif de raccordement étanche de l'extrémité d'une tuyauterie (1) à un corps (2) présentant un embout (2a) fileté extérieurement et un logement (3) intérieur d'accueil de cette extrémité, avec une section d'entrée conique (3a), comprenant :
- un écrou (4) avec une chambre (4a) taraudée pour la réalisation et le démontage du raccord, coopérant avec l'embout fileté (2a),
- une première bague (5) coupante possédant un nez (5a) plastiquement déformable destiné à pénétrer dans la section conique (3a),
- un élément annulaire d'étanchéité,
**caractérisé en ce qu'**il comprend
- une seconde bague (6) de poussée, possédant une face avant (6a) destinée à coopérer avec l'arrière (5d) de la bague coupante et une face arrière (6d) pour coopérer avec l'écrou (4),
les deux bagues (5, 6) étant logées dans la chambre (4a) de l'écrou (4) pour être serrées entre ce dernier et le corps, et
ledit élément (7) annulaire d'étanchéité étant logé entre la bague coupante (5) et la bague de poussée (6) pour être au moins partiellement comprimé et faire saillie radialement entre celles-ci vers l'intérieur au moment du serrage.

2. Dispositif selon la revendication 1, **caractérisé en ce que** cet élément d'étanchéité (7) est logé dans un chambrage intérieur (6b) de la bague de poussée (6) ouvert du côte d'une collerette (5e) axiale arrière de la bague coupante (5) qui peut y pénétrer.

3. Dispositif selon l'une quelconque des revendications précédentes, **caractérisé en ce que** la collerette axiale (5e) pénètre dans le chambrage (6b) avec un léger serrage.

4. Dispositif selon la revendication 2, **caractérisé en ce que** ledit élément d'étanchéité (23a) est prolongé par un manchon (23b) coiffant la partie arrière de la bague coupante (5) et dépassant l'extrémité avant de la bague de poussée (6), formant ainsi par sa partie comprimante le chambrage et la collerette, un élément de liaison élastique des deux bagues (5, 6) et par son extrémité avant, l'élément d'étanchéité (23b) supplémentaire entre le corps (2) et la bague de poussée (6).

5. Dispositif selon la revendication 4, **caractérisé en ce que** la collerette (5e) et/ou le chambrage (6b) possèdent des moyens (24) de séparation du manchon (23b) susdit de l'élément d'étanchéité (23a) au moment du serrage.

6. Dispositif selon l'une quelconque des revendications 1 à 3, **caractérisé en ce qu'**il comporte un élément d'étanchéité supplémentaire (16) porté par la bague coupante (5) contre un épaulement (5f) de celle-ci situé à la base du nez plastiquement déformable (5a)

7. Dispositif selon la revendication 1, **caractérisé en ce que** la face arrière (6d) de la bague de poussée (6) est conique d'un angle (a) plus fermé que celui d'une face conique (8) de l'écrou d'entraînement de la bague de poussée.

8. Dispositif selon la revendication 2, **caractérisé en ce que** l'entrée du chambrage (6b) est en forme de surface conique (26) de rabattement vers le centre de l'extrémité libre de la collerette (5e) axiale de la bague coupante (5).

9. Dispositif selon l'une quelconque des revendications précédentes, **caractérisé en ce qu'**il comporte un organe de maintien des deux bagues (5, 6) dans la chambre (4a) de l'écrou (4), constitué par un mandrin (10) divisé par un épaulement (13) en une section (11) logée dans la chambre de l'écrou (4) jusqu'à l'épaulement et sur laquelle au moins une (5) des bagues (5, 6) est maintenue par friction et en une section (12) externe à l'écrou servant de support pour un signe d'identification (13) du dispositif.

10. Dispositif selon la revendication 9, **caractérisé en ce que** la section externe (12) est située à l'opposé du nez (5a) de la bague coupante (5).

## Claims

1. A device for leaktight connection of the end of a pipe (1) to a body (2) presenting an endpiece (2a) having an outside thread and an inner housing (3) with a conical inlet section (3a) for receiving said end, the device comprising:
· a nut (4) with a tapped chamber (4a) for making and breaking the connection, and co-operating with the threaded endpiece (2a);
· a first sharp ring (5) presenting a plastically deformable nose (5a) for penetrating into the conical section (3a); and
· an annular sealing element;
the device being **characterized in that** it comprises:
· a second ring (6) for applying thrust, the second ring possessing a front face (6a) for co-operating with the rear (5d) of the sharp ring, and a rear face (6d) for co-operating with the nut (4),
the sharp and thrust rings (5, 6) being received in the chamber (4a) of the nut (4) to be clamped between the nut and the body, and
said annular sealing element (7) being housed between the sharp ring (5) and the thrust ring (6) to be compressed at least one in part and to project radially therebetween towards the inside at the moment of tightening.

2. A device according to claim 1, **characterized in that** the sealing element (7) is housed in an inner setback (6b) of the thrust ring (6) that is opened beside a rear axial collar (5e) of the sharp ring (5) that can penetrate therein.

3. A device according to claim 1 or claim 2, **characterized in that** the axial collar (5e) penetrates into the setback (6b) with a small amount of clamping.

4. A device according to claim 2, **characterized in that** said sealing element (23a) is extended by a sleeve (23b) covering the rear portion of the sharp ring (5) and projecting beyond the front end of the thrust ring (6), thereby forming by means of its compressible portion the setback and the collar and an elastic connection element between the sharp ring and the thrust ring (5, 6), and by means of its front end, the additional sealing element (23b) between the body (2) and the thrust ring (6).

5. A device according to claim 4, **characterized in that** the collar (5e) and/or the setback (6b) possess means (24) for separating the above-mentioned sleeve (23b) from the sealing element (23a) at the moment of clamping.

6. A device according to any one of claims 1 to 3, **characterized in that** it includes an additional sealing element (16) carried by the sharp ring (5) against a shoulder (5f) thereof that is situated at the base of the plastically-deformable nose (5a).

7. A device according to claim 1, **characterized in that** the rear face (6d) of the thrust ring (6) is conical with a narrower angle (a) than the angle of a conical face (8) of the nut for driving the thrust ring.

8. A device according to claim 2, **characterized in that** the entry to the setback (6b) is in the form of a conical surface (26) urging back towards the center the free end of the axial collar (5e) of the sharp ring (5).

9. A device according to any preceding claim, **characterized in that** it includes a member for holding the sharp and thrust rings (5 and 6) in the chamber (4a) of the nut (4), said member being constituted by a mandrel (10) subdivided by a shoulder (13) into a section (11) housed in the chamber of the nut (4) and extending to the shoulder, with at least one (5) of the sharp and thrust rings (5, 6) being held thereon by friction, and a section (12) outside the nut serving as a support for a sign (13) identifying the device.

10. A device according to claim 9, **characterized in that** the outer section (12) is situated on the side opposite from the nose (5a) of the sharp ring (5).

## Patentansprüche

1. Vorrichtung für eine dichte Verbindung des Endes einer Rohrleitung (1) mit einem Körper (2), der einen Ansatz (2a) mit einem Außengewinde und eine Innenaussparung (3) zur Aufnahme des Endes mit einem konischen Eingangsabschnitt (3a) hat, umfassend:
- eine Mutter (4) mit einer Kammer (4a), die ein Innengewinde zum Herstellen und zum Lösen der Verbindung bildet, das mit dem Gewindeansatz (2a) zusammenwirkt,
- einen ersten Schneidering (5) mit einer Nase (5a), die plastisch verformbar und dazu vorgesehen ist, in den konischen Abschnitt (3a) einzudringen,
- ein ringförmiges Dichtungselement
**dadurch gekennzeichnet, daß** die Vorrichtung einen zweiten Druckring (6), der eine Vorderfläche (6a), die dazu vorgesehen ist, mit dem hinteren Teil (5d) umfasst, des Schneidrings zusammenzuwirken, und eine Hinterfläche (6d) hat, die mit der Mutter (4) zusammenwirkt,
wobei die beiden Ringe (5, 6) in der Kammer (4a) der Mutter (4) angeordnet sind, um zwischen dieser und dem Körper eingespannt zu werden,
und dass das ringförmiges Dichtungselement (7) zwischen dem Schneidering (5) und dem Druckring (6) positioniert ist, um zumindest teilweise zusammengedrückt zu werden und im Moment des Festspannens radial zwischen den Ringen ins Innere weisend hervorzustehen.

2. Vorrichtung nach Anspruch 1, **dadurch gekennzeichnet, daß** das Dichtungselement (7) in einer inneren Kammer (6b) des Druckrings (6) angeordnet ist, die zu einem hinteren axialen Kragen (5e) des Schneiderings (5) hin offen ist, der dort eindringen kann.

3. Vorrichtung nach einem der vorhergehenden Ansprüche, **dadurch gekennzeichnet, daß** der axiale Kragen (5e) unter leichter Spannung in die Kammer (6b) eindringt.

4. Vorrichtung nach Anspruch 2, **dadurch gekennzeichnet, daß** das Dichtungselement (23a) von einer Hülse (23b) verlängert wird, welche den hinteren Abschnitt des Schneiderings (5) übergreift und über das vordere Ende des Druckrings (6) hinausgeht, wobei durch ihren Abschnitt, der die Kammer und den Kragen zusammendrückt, ein elastischen Element zum Verbinden der beiden Ringe (5, 6) und durch ihren vorderen Abschnitt das zusätzliche Dichtungselement (23b) zwischen dem Körper (2) und dem Druckring (6) gebildet wird.

5. Vorrichtung nach Anspruch 4, **dadurch gekennzeichnet, daß** der Kragen (5e) und/oder die Kammer (6b) Mittel (24) zum Trennen der Hülse (23b) vom Dichtungselement (23a) im Moment des Festspannens umfassen.

6. Vorrichtung nach einem der Ansprüche 1 bis 3, **dadurch gekennzeichnet, daß** sie ein zusätzliches Dichtungsmittel (16) umfaßt, das von dem Schneidering (5) anliegend an einer Schulter (5f) dieses Rings getragen ist und an der Basis der plastisch verformbaren Nase (5a) angeordnet ist.

7. Vorrichtung nach Anspruch 1, **dadurch gekennzeichnet, daß** die Hinterfläche (6d) des Druckrings (6) konisch ist und einen Winkel (a) hat, der geschlossener ist als der Winkel einer konischen Fläche (8) der Mutter, die den Druckring bewegt.

8. Vorrichtung nach Anspruch 2, **dadurch gekennzeichnet, daß** der Eingang der Kammer (6b) die Form einer konischen Fläche (26) hat, die in Richtung des Mittelpunkts des freien Endes des axialen Kragens (5e) des Schneiderings (5) geneigt ist.

9. Vorrichtung nach einem der vorhergehenden Ansprüche, **dadurch gekennzeichnet, daß** sie ein Mittel zum Halten der beiden Ringe (5, 6) in der Kammer (4a) der Mutter (4) umfaßt, das von einem Dorn (10) gebildet ist, der durch eine Schulter (13) unterteilt ist in einen Abschnitt (11) in der Kammer der Mutter (4) bis zur Schulter, auf dem zumindest einer (5) der Ringe (5, 6) reibschlüssig gehalten ist, und einen Abschnitt (12), der außerhalb der Mutter liegt und als Träger für ein Zeichen zur Identifizierung (13) der Vorrichtung dient.

10. Vorrichtung nach Anspruch 9, **dadurch gekennzeichnet, daß** der Außenabschnitt (12) von der Nase (5a) des Schneiderings (5) weg weisend angeordnet ist.
